Europäisches Patentamt

European Patent Office

Office européen des brevets

(11) Publication number: **0 311 734**
**A1**

## (12) EUROPEAN PATENT APPLICATION

(21) Application number: **87830360.1**

(22) Date of filing: **14.10.87**

(51) Int. Cl.⁴: **F16H 15/52 , F16H 17/00**

(43) Date of publication of application:
**19.04.89 Bulletin 89/16**

(84) Designated Contracting States:
**AT BE CH DE ES FR GB GR IT LI LU NL SE**

(71) Applicant: **L.B. TRASMISSIONI MECCANICHE SRL**
**Via Bazzane 11A**
**Calderara di Reno Bologna(IT)**

(72) Inventor: **Chinni, Paolo**
**Via Massarenti 9**
**Casalecchio di Reno Bologna(IT)**

(74) Representative: **Sassatelli, Franco T., Dr.**
**c/o INIP via Ruggi 5**
**I-40137 Bologna(IT)**

(54) Epicycloidal speed variator with integrated frame and control screw with double projection hand wheel.

(57) The gearbox if foreseen with a single casing (1) altogether working for containing organs and with bearing holder outlet cover, and consists of a solar driving disk (2) consisting of a parcel of Belleville springs (3) which catch a satellite assembly (4) on two outer rings (5 and 6). By means of the bushes (7), the satellites (4) transmit the movement to the satellite bearing disk (8) which turns simultaneously with the outlet shaft (9) and is supported by the bearings (10 and 11). The motion change is obtained by shifting the pin (12) through the control screw (13) with wheel (14). This transition spaces the outer rings (5 and 6) with consequent outward movement of the satellites (4) and, therefore, with change of the transmission pitch diameters. The wheel (14) can be fitted either on the right or on the left side without disassembling the control cover (15) by means of the control screw (13) fitted with double outjutting hold.

FIG. 1

Epicycloidal speed variator with integrated frame and control screw with double projection hand wheel.

The invention refers to an epicycloidal speed variator which uses a single carcase in combined operation containing the speed variator organs as well as the outlet cover holding the bearings. The speed variators enable to obtain a continuous motion change allowing the regulation of several machineries and plants. They are nearly always connected either with worm gear reducers or gears in order to reduce the outlet speed and to allow the choice of a proper speed range according to the user's requirements. These reducers work on the principle of a continous change of the transmission pitch diameters, thus enabling an endless number of ratios.

The variators can adopt different ratios and, in particular, the epicycloid ones employ a containment case in which the inside particulars are fitted and contained in a closing cover. This closing cover supports the pile of the variator outer rings in the mounting phase and, during the operation, it supports the exit shaft of the same variator by means of bearings.

The invention substantially carries out the outside casing and the outlet bearing holding cover which, therefore, form only one assembly. In this way, a consistent sparing is obtained both in the construction proceeding and in the assembling one. In a version, a single-body aluminium carcase 1 is foreseen for containing the epicycloidal variator organs and as outlet cover.

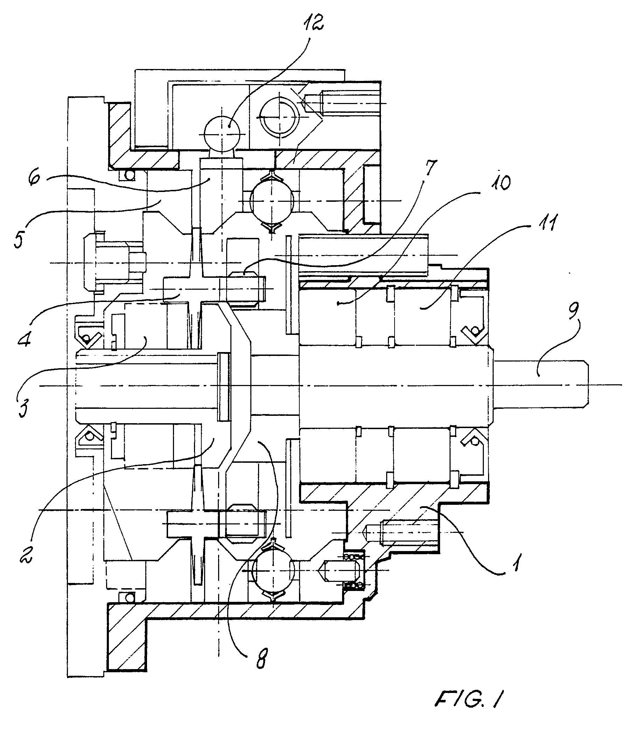

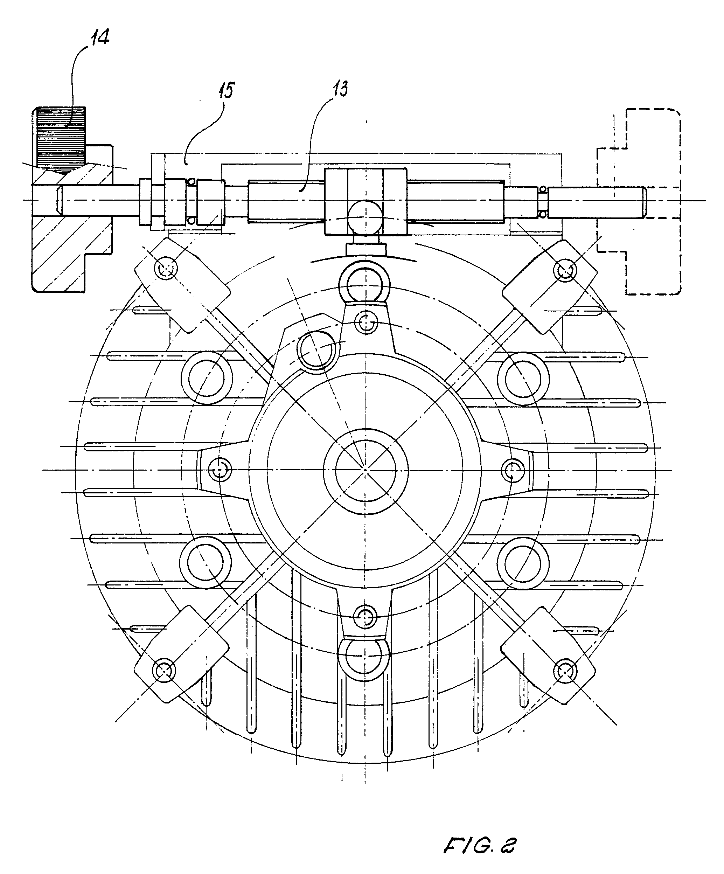

The execution is illustrated in an essentially executive way in the drawings of the tables 1 and 2. With reference to these ones, fig. 1 is the longitudinal section of the epicycloid variator, whereas fig. 2 is its front view. From fig. 1, the shape with integrated functions of carcase 1 can be noted.

According to the present version, the variator consists of a solar driving disk 2 formed by a bundle of Belleville springs 3 which clutch a satellite assembly 4 turning on rings 5 and 6. Through the bushes 7, the satellites 4 transmit the movement to the satellite bearing disk 8 turning with the outlet shaft 9 which is supported by bearings 10 and 11. The motion change can be obtained by shifting pivot 12 through the regulation screw 13 with hand-wheel 14. This operation causes the outer rings 5 and 6 to be spaced with consequent pushing outwards of the satellites 4 and consequent change of the transmission pitch diameters.

At present, the variators are fitted with either right or left handwheel. According to the employ requirements, it is often necessary to shift the handwheel either from the right to the left or in the contrary sense, which operation can be carried out by loosing four or more screws and by turning the above cover by 180°, as well as by replacing the packing. A further particular feature of the invention enables to change the position of the handwheel by simply shifting and inserting it on the hold projecting from the screw 13. This is possible because two holds are fitted, on the opposite side, on screw 13 for fitting the handwheel on its two ends.

In the executions, the carcase can be carried out in different forms and materials, as well as the organs of the epicycloid organs of the speed changer can be executed in different ways too. The variator can be connected indifferently either to reducers with worm gear or to gears according to the employ requirements.

## Claims

1) Epicycloidal speed variator with integrated frame and control screw with double projection hand wheel, characterized by the fact that it employs a single-body carcase (1) with integrated functions of containment for the variator organs and of the bearing holding outlet cover.

2) Epicycloidal speed variator with integrated frame and control screw with double projection hand wheel, as per claim 1, characterized by the fact that it consists of a solar driving disk (2) formed by a bundle of Belleville washers (3) which pinch a satellite assembly (4) which rotate on two rings (5 and 6). The satellite (4) transmit the movement, through the bushes (7), to the disk (8) which supports the satellites and turns simultaneously with the outlet shaft (9) supported by the bearings (10 and 11). The movement change is obtained by shifting the pivot (12) by means of the regulation screw (13) with hand-wheel (14). This operation causes the outer rings (5 and 6) to be spaced with consequent going out of the satellites (4) and change of the transmission pitch diameter.

3) Epicycloidal speed variator with integrated frame and control screw with double projection hand wheel, as per claim 1, characterized by the fact that two attaching holds for wheel (14) are present on the two screw ends.

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 104 437  (SHINPO KOGYO) <br> * Pages 2-4; figures 1,3 * | 1 | F 16 H  15/52 <br> F 16 H  17/00 |
| A | --- | 2 | |
| X | FR-A-  602 592  (ARTER) <br> * Pages 1-3; figure 1 * | 1 | |
| A | --- | 2 | |
| A | GB-A-  968 976  (KIRSCHEY) <br> * Whole document * | 1,2 | |
| A | US-A-3 108 496  (KASHIHARA) <br> * Column 4, lines 9-17; figures 1,4 * | 1,3 | |
| A | DE-A-2 658 791  (PLANETROLL) <br> * Page 3; figure 2 * | 1,3 | |

TECHNICAL FIELDS
SEARCHED (Int. Cl.4)

F 16 H  15/00
F 16 H  17/00

The present search report has been drawn up for all claims

| Place of search | Date of completion of the search | Examiner |
|---|---|---|
| THE HAGUE | 10-01-1989 | FLORES E. |